# EUROPEAN PATENT APPLICATION

(11) **EP 2 455 341 A1**
(43) Date of publication of application: **23.05.2012**
(21) Application number: 10799405.5
(22) Date of filing: 13.06.2010
(51) Int. Cl.: C01G 45/10

(54) **METHOD FOR PREPARING MANGANESE SULFATE**

(30) Priority: 16.07.2009 CN 200910157921
(71) Applicant: Guizhou Redstar Developing Co., Ltd., Guizhou 561206 (CN); Shenzhen Haoyitong Investment And Development Co., Ltd., Guangdong 518000 (CN)
(72) Inventor: JIANG, Zhiguang, Anshun Guizhou 561206 (CN); HUA, Dong, Chongqing 402368 (CN)
(74) Representative: Croce, Valeria
(86) International application number: PCT/CN2010/073953
(87) International publication number: WO 2011/006407

(57) **Abstract**

Provided is a method for preparing manganese sulfate, which comprises the following steps: adding sulfide with reducing ability to manganese dioxide ore by quantification according to the reaction molar ratio to fully react, determining the end-point of reaction, and then separating and washing solid product; reacting the solid product with 9-12mol/L H₂SO₄, controlling the end-point of reaction to pH 3-5, keeping the MnSO₄ concentration in the reaction liquid within the range of 300 - 400g/L, and then separating solid from liquid after reaction; and using H₂SO₄ to acidify the separated solution until the pH value of the solution is 2-3, adding hydrogen peroxide and heating, finely filtering to remove solid phase, and then vaporizing, condensing, crystallizing and dewatering the filtered liquid to obtain manganese sulfate. The method enables a plurality of heavy metals to be converted into indissoluble sulfides while obtaining manganous compounds that are dissoluble in acid. At the same time, manganese sulfate low in calcium, magnesium and heavy metals is obtained.

## Description

### Technical field

The present invention relates to a method for preparing manganese sulfate, which uses reductive sulfide to react with manganese dioxide ore, to produce manganese sulfate low in heavy metals, and further obtain manganese sulfate low in heavy metals, calcium and magnesium.

### Background art

Manganese sulfate is a kind of basic industrial chemicals. There are lots of conventional methods for preparing manganese sulfate, for example publication NO. CN1425613 disclosed a process for preparing barium hydroxide (Ba(OH)₂) and manganese sulfate (MnSO₄) by using manganese dioxide (MnO₂) and barium sulphide (BaS) as materials, but the manganese sulfate prepared by this process contains a large number of impurities, especially heavy metal ions, and calcium and magnesium ions. According to the teaching of the disclosed document, in order to obtain manganese sulfate with high yield it is necessary to add excess manganese dioxide compared to sulphide according to the molar ratio. But another intractable problem is neglected in the document, i.e. the problem of removing metal impurities. There are always no effective means for solving the separation of such metal impurities in prior art. With the development of lithium manganate (LiMn₂O₄) battery, higher requirements for physical and chemical indexes of MnSO₄·H₂O and MnCO₃ materials have been put forward, especially the requirements for MnSO₄·H₂O and MnCO₃ used in power battery are stricter, particularly requiring low metal impurities. MnSO₄·H₂O and MnCO₃ materials according to conventional methods can not meet the requirements of such products.

The inventor does not rely on conventional methods to remove metal impurities, but uses the design that may be contrary to prior art, i. e., comprises using sulphide with certain concentration or content of solutions such as SrS , BaS , Sr(HS)₂ , Ba(HS)₂ , H₂S, SO₂ , SO₃²⁻ , Na₂S, NaHS, to react with manganese dioxide, on one hand to convert manganese dioxide into manganous oxide which can be dissoluble in acid, on the other hand to make various metals such as iron, cobalt, nickel, copper, ect., form indissolvable sulphides, and then controlling reaction condition as low acidity to dissolve manganous oxide, while leaving most metal sulphides, and calcium and magnesium carbonates in residue, thus to obtain manganese sulfate product low in heavy metals, and calcium and magnesium.

### Summary of the invention

The present invention mainly uses the reducing ability of sulphide to carry out reaction with manganese dioxide, and then dissolving manganous oxide to react while controlling condition of low acidity. In the acid solution with such pH value, metal sulphides are indissolvable salts, so heavy metals, and calcium and magnesium ions can be removed skillfully during reaction process. The major chemical reactions related to include:

Mn⁴⁺+S²⁻ → Mₙ²⁺+S

M+S²⁻ → MS(M represents metal ion, may be Fe, Co, Ni, Zn, Cu, Pb, Cd)

MnO+H₂SO₄ → MnSO₄+H₂O

Major process conditions of reaction and reaction equipment in every step, have been disclosed in CN1425613 and other published documents. The inventor also insists that reaction equipment is not the distinctive feature of the present invention, but the steps of extracting and separating.

Firstly, sulfide with reducing ability is added into manganese dioxide ore by quantification according to the reaction molar ratio. The object of this way is to make the metal ions in manganese dioxide ore fully react with the sulfide, to form metal sulfides. In order to save raw materials, manganese and iron contents in ore powder of manganese dioxide are generally calculated at first, and other metal contents can be ignored for the reason that the contents are very low compared to manganese content. The ratio of molar amount of sulfide added to that of manganese and iron is manganese : sulfur = 1 : 1 ∼ 1.1, iron : sulfur = 1 : 1.5 ∼ 1.65. When sulfide is added over the range of the ratio, the present invention can also be carried out, but it brings about larger amount of waste for sulfide material. In practice, the addition amount of sulfide is calculated according to the molar ratio of manganese : sulfur = 1:1, iron : sulfur = 1:1.5. Stirring treatment is carried out within the range of 40 ∼ 85°C, preferably within 65 ∼ 85°C to fully react, and then the solid product is separated and washed. The change of manganese oxide or sulfide content is required to detect, preferably the change of manganese dioxide and manganous oxide content is detected, so as to determine the end-point of reaction. Selected method in this step can be chemical method for detecting the contents of [Mn⁴⁺] and [Mn²⁺] respectively. After the reaction reaches the set point, solid-liquid separation is carried out. Liquid phase is carried out post treatment according to the different type of addition sulfide. Solid phase is washed with hot water of 40 ∼ 90°C, preferably washed with hot water of 60 ∼ 80°C, generally washed twice according to the ratio of material to water of 1:4, and carried out solid-liquid separation. At that time, solid phase mainly comprises manganous oxide or metal sulfides. Potassium and sodium ions are separated during washing process for manganous oxide with hot water.

Secondly, solid phase is reacted with 9-12mol/L H₂SO₄, preferably 12mol/L H₂SO₄, and the reaction condition are normal pressure and temperature. The end-point of reaction is controlled as pH value equals 3-5, preferably equals 4-4.5, and the feed amount is controlled according to MnO content to keep the MnSO₄ concentration in the reaction liquid within the range of 300 ∼ 400g/L. The MnSO₄ content is mainly controlled by the ratio of addition water during pulping according to the grade of manganese dioxide ore. When using low grade of manganese dioxide ore, adding less water during pulping, and when using high grade of manganese dioxide ore, adding more water. Solid-liquid separation is carried out after reaction. When pH is about 4.5, the dissolution rate of calcium carbonate and magnesium carbonate is very low, and because of alkalescence of manganous oxide, it is easy to dissolve, so solid phase mainly comprises residue of metal sulfides, and calcium carbonate and magnesium carbonate which have not been dissolved. The solid phase is washed with hot water of 40 - 90°C, and the washing liquid can be recovered to step three and used as supplement liquid. Because of the common-ion effect (solubility) between MnSO₄ and CaSO₄, controlling MnSO₄ concentration reduces the dissolving power of calcium. For this step, if the concentration of selected sulfuric acid is too high, sulfuric acid has oxidative ability; if the concentration of selected sulfuric acid is too low, the usage of reaction heat is insufficient, and energy loss is great. Certainly, sulfuric acid with lower molar concentration can also be used. In short, the molar concentration of sulfuric acid is not the key parameter in this step.

Thirdly, the solution obtained after solid-liquid separation is acidified with H₂SO₄ until the pH value of the solution is 2-3, hydrogen peroxide is added and heated so as to carry out oxidation-reduction reaction between polysulfide and hydrogen peroxide, i.e. Sₓ₊₁ + H⁺ + H₂O →S+H₂O, to separate sulfides. In this step, formed sulfur is fine, so that common filtration means may be ineffective. Therefore filter membrane with certain pore size is used for finely filtering the mixture, and the filtered liquid is vaporized, condensed, crystallized and the obtained crystalline is dewatered to obtain manganese sulfate.

In order to further purify manganese sulfate, dewatered manganese sulfate obtained in step three can be carried out recrystallization to obtain high purity manganese sulfate product.

The present invention could use various grades of manganese dioxide ore, and could use the iron sulfide resulted from the reaction of sulfide, to solve the difficulty of solid-liquid separation brought about by large amount of iron colloid originated from carbon reduction method.

The present invention uses sulfide to react, and enables a plurality of harmful heavy metals to be converted into indissoluble sulfides while obtaining manganous compounds that can be dissoluble in acid, so as to solve the problem of complete separation of heavy metals.

The manganese sulfate obtained in the present invention has the characteristics of low potassium and sodium, low calcium and magnesium, and low heavy metals, and can meet the strict requirement of lithium-ion secondary battery for manganese sulfate material.

### Embodiments

Above all, ore powder of manganese dioxide was sieved with 80 mesh screen, the contents of manganese and iron were detected with chemical method, and then the blending ratio of reactants was worked out.

### Example 1

4000ml of 50g/L SrS solution was added into a 5000ml beaker, and 330g of ore powder of manganese dioxide (MnO₂ 25.1%, Fe 7.8%) was added while stirring. The solution was heated to the temperature within the range of 70±5°C by using electric furnace, and suction filtered and separated after reacting for 2 hours. The residue was washed twice with hot water (60°C) according to the ratio of material to water as 1:4, wherein stirred at 70±80°C for 30 mins, and carried out liquid-solid separation at each time.

The washed solid mainly comprised manganous oxide, and a small amount of metal sulfides. The washed solid was placed into a 2000ml beaker, a small amount of deionized water was added in the solid and the mixture was pulped, and 9mol/L H₂SO₄ was added slowly to react. The pH value was detected at any time during reaction process, and continued adding the acid until the pH value was 3. The suction filtering and separating treatment was carried out, the residue was eluted with a small amount of hot water, and the filtrates were mixed and finely filtered with filter membrane of 0.24 µm. The MnSO₄ content in the solution was controlled within 310±10g/L.

Above obtained finely filtered filtrate was placed in a 2000ml beaker, 12mol/L H₂SO₄ was added to make the pH value be 2.5, and 1.5ml of 27.5wt% H₂O₂ was added, then heated up by electric furnace while stirring, kept boiling for 15-20mins, and filtered with slow qualitative filter paper. The residue was discarded. The filtrate was evaporated and crystallized while stirring. The crystallization was centrifuged to dewater with miniature centrifuge, and placed in oven with 85°C to oven dry for 18-20 hours, to obtain sample 1^{#} of manganese sulfate.

### Example 2

4000ml of 0.47mol/L Sr(HS)₂ was added into a 5000ml beaker, 514g ore powder of manganese dioxide (MnO₂ 34.0%, Fe 12.7%) was added while stirring, then heated to 60 - 65°C by using electric furnace, reacted for 2.5 hours while stirring, and suction filtered and separated. The filtrate was used for recovering strontium hydroxide. The residue was washed twice with 80°C hot water, wherein stirred for 30 mins, and then separated solid from liquid at each time.

The washed manganous oxide was placed into a 2000ml beaker, a small amount of deionized water was added into manganous oxide and the mixture was pulped, and 9 mol/L H₂SO₄ was added slowly to react. The acid continued being added until the reaction reaches the pH value of 4. The MnSO₄ content in solution was controlled within 390±10g/L. Then the suction filtering and separating was carried out, the residue was eluted with a small amount of hot deionized water, and the filtrate was placed in a 2000ml beaker after mixing and finely filtering. H₂SO₄ was continued adding until the pH value is 2, and 1.5ml of 27.5% H₂O₂ was added, then heated up by using electric furnace to evaporate, condense and crystallize, to control the residual liquid within 10%-15%. The crystallization was centrifuged to dewater, and then dissolved to be supersaturation with deionized water. The solution was filtered, heated to evaporate and crystallize, and then separated and oven dried to obtain sample 2^{#} of manganese sulfate.

### Example3

4000ml of 180g/L BaS solution was added into a 5000ml beaker, and 583g ore powder of manganese dioxide (MnO₂ 34%, Fe 12.7%) was added while stirring. The reaction temperature was controlled at 70 - 75°C. The suction filtering treatment was carried out after reacting for 2.5 hours while stirring, the filtrate was used for recovering barium hydroxide, and the residue was washed twice with 80°C of hot water according to the ratio of material to water as 1:4, wherein stirred for 30 mins, and then separated solid from liquid at each time.

The filtered manganous oxide was placed into a 2000ml beaker, a small amount of deionized water was added into manganous oxide and the mixture was pulped, and then 12 mol/L H₂SO₄ was added slowly to react. The acid continued being added until the pH value of 4.5. The MnSO₄ content in solution was controlled within 350±10g/L. Then the suction filtering and separating treatment was carried out, the residue was eluted with a small amount of hot water, and the filtrates were mixed and finely filtered. The residue was discarded. The filtrate was placed in a 2000ml breaker, H₂SO₄ was added until the pH value is 3, and then 1.5ml of 27.5% H₂O₂ was added. The electric furnace was started to heat, and the heating treatment was ceased after evaporating while stiring to appear a small amount of crystallization. The solid-liquid separation treatment was carried out, and the solution was place into a 2000ml beaker, heated to evaporate and crystallize. The crystallization was centrifuged to dewater, and then oven dried to obtain sample 3# of manganese sulfate.

### Example4

The example 4 is the repeat of example 3. The differences between them lie in that: when manganous oxide reacted with the added sulfuric acid, the acid continued adding until the reaction reaches the pH value of 4.5. Finally the sample 4# of manganese sulfate was obtained.

The content of manganese sulfate crystallization of every sample obtained in above examples and the contents of various impurities was shown as the following table:

| content | example 1^{#} | example 2^{#} | example 3^{#} | example 4^{#} |
|---|---|---|---|---|
| MnSO₄H₂O(wt%) | 99.20 | 99.71 | 99.55 | 99.45 |
| K | <50ppm | <50ppm | <50ppm | <50ppm |
| Na | <50ppm | <50ppm | <50ppm | <50ppm |
| Ca | 249ppm | 84ppm | 121ppm | 140ppm |
| Mg | <10ppm | <10ppm | <10pom | <10pom |
| Fe | 5.6ppm | 2.4ppm | 5.7ppm | 5.9ppm |
| Cu | <0.5ppm | <0.5ppm | <0.5ppm | <0.5ppm |
| Co | ND | ND | ND | ND |
| Ni | <0.1ppm | <0.1ppm | <0.1ppm | <0.1ppm |
| Zn | <0.5ppm | <0.5ppm | <0.5ppm | <0.5ppm |
| Pb | ND | ND | ND | ND |
| Cd | ND | ND | ND | ND |

It can be seen according to above table that, manganese sulfate with higher purity can be produced by using the method of the present invent, and the contents of various metal impurities reduce significantly. It also can be seen that the key point of the method of the present invent lies in controlling the pH value of the solution involving the reaction between manganous oxide and sulfuric acid, and controlling the MnSO₄ content in the solution.

## Claims

1. A method for preparing manganese sulfate, which comprises the following steps:
A adding sulfide with reducing ability to manganese dioxide ore by quantification according to the reaction molar ratio, stirring fully to react at 40 - 85°C, determining the end-point of reaction, and then separating and washing solid product;
B reacting the solid product with 9-12mol/L H₂SO₄, wherein the reaction conditions are normal pressure and normal temperature, controlling the end-point of reaction as pH 3-5, controlling feed amount according to MnO content, so as to keep the MnSO₄ concentration in the reaction liquid within the range of 300 ∼ 400g/L, and then carrying out solid-liquid separation after completing reaction;
C acidifying the solution resulted from the solid-liquid separation with H₂SO₄ until the pH value of the solution is 2-3, adding hydrogen peroxide and heating, finely filtering the mixture to remove solid phase, and then vaporizing, condensing and crystallizing the filtrate and dewatering the obtained crystalline to obtain manganese sulfate.

2. The method for preparing manganese sulfate according to claim 1, wherein, further comprises the step of performing recrystallization to purify manganese sulfate obtained in step C.

3. The method for preparing manganese sulfate according to claim 1 or 2, wherein, said sulfide with reducing ability comprises SrS, BaS, Sr(HS)₂, Ba(HS)₂, H₂S, SO₂, SO₃²⁻, Na₂S, NaHS.

4. The method for preparing manganese sulfate according to claim 1 or 2, wherein, in step A, the ratio of molar amount of sulfide added to that of manganese and iron is manganese : sulfur = 1 : 1 ∼ 1.1, iron : sulfur = 1 :1.5 ∼ 1.65 based on quantitative calculation.

5. The method for preparing manganese sulfate according to claim 1 or 2, wherein, in step A, the end-point of reaction is determined by detecting the contents of [Mn⁴⁺] and [Mn²⁺] respectively with chemical method.

6. The method for preparing manganese sulfate according to claim 1 or 2, wherein, in step A, the solid phase is washed with hot water of 40 - 90°C.

7. The method for preparing manganese sulfate according to claim 6, wherein, washing process is generally carried out twice according to the ratio of material to water of 1:4.

8. The method for preparing manganese sulfate according to claim 1 or 2, wherein, in step B, the molar concentration of said H₂SO₄ is 12mol/L.

9. The method for preparing manganese sulfate according to claim 1 or 2, wherein, in step B, said end-point of reaction is controlled as pH 4-4.5.

10. The method for preparing manganese sulfate according to claim 1 or 2, wherein, in step C, said finely filtering is filtering treatment with 0.24µm of filter membrane.
